# EUROPEAN PATENT APPLICATION

(11) **EP 3 337 200 A1**
(43) Date of publication of application: **20.06.2018**
(21) Application number: 16834602.1
(22) Date of filing: 04.08.2016
(51) Int. Cl.: H04W 4/14

(54) **SHORT MESSAGE TRANSMISSION AND RECEPTION METHOD AND DEVICE**

(30) Priority: 13.08.2015 CN 201510498533
(71) Applicant: Alibaba Group Holding Limited, Grand Cayman (KY)
(72) Inventor: LI, Liang, Hangzhou Zhejiang 311121 (CN)
(74) Representative: Barker Brettell LLP
(86) International application number: PCT/CN2016/093187
(87) International publication number: WO 2017/024978

(57) **Abstract**

A method and an apparatus for sending and receiving a message are disclosed in the present invention. The method includes converting information content of a message to be sent into byte data; searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and sending the character data through messaging. The present invention solves the technical problems of limited areas of uses of a message due to a length limitation for content in the message.

## Description

The present application claims priority to Chinese Patent Application No. 201510498533.1, filed on 13 August 2015, entitled "Message Sending and Receiving Methods and Apparatuses," which is hereby incorporated by reference in its entirety.

### Technical Field

The present invention relates to the technological field of the Internet, and particularly, to message sending and receiving methods and apparatuses.

### Background

A method of communications between a server and a client is to establish a network connection. However, a network connection may not exist in some environments. Under these circumstances, data communications between a client and a server can be conducted via messages. Moreover, messages are also used for communications with mobile numbers. In general, messages can only support transmission of Unicode textual content, with a length of 70. Since messages have a length limitation and content thereof is publicly readable, the messages, which act as content that can be sent in complex communications, are suffered a great deal of limitations.

A solution of anti-theft of mobile phones provided by a related technology is to send a command to a target mobile phone through a mobile phone of a friend or relative. However, due to a number of limitations for messages, an existing implementation is to send a predefined command code only, without the capability of including more detailed parameters, thus having very limited security and areas of use.

Currently, no effective solution has been proposed for the above problems.

### Summary

Embodiments of the present invention provide message sending and receiving methods and apparatuses, to solve the technical problems of limited areas of uses of a message due to a length limitation for content in the message.

According to an aspect of the embodiments of the present invention, a message sending method is provided, which includes converting information content of a message to be sent into byte data; searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and sending the character data by means of messaging.

According to another aspect of the embodiments of the present invention, a message receiving method is provided, which includes receiving a message from a sending party; finding character data corresponding to information content of the message from a pre-stored character set, the character set includes predetermined byte data, predetermined characters, and mapping relationships between the predetermined byte data and the predetermined characters; and restoring the found character data to original information content of the message.

According to another aspect of the embodiments of the present invention, a message sending apparatus is provided, which includes a conversion module used for converting information content of a message to be sent into byte data; a searching module used for searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and a sending module used for sending the character data by means of messaging.

According to another aspect of the embodiments of the present invention, a message receiving apparatus is provided, which includes a receiving module used for receiving a message from a sending party; a searching module used for finding character data corresponding to information content of the message from a pre-stored character set, the character set includes predetermined byte data, predetermined characters, and mapping relationships between the predetermined byte data and the predetermined characters; and a restoration module used for restoring the found character data to original information content of the message.

In the embodiments of the present invention, information content of a message to be sent is converted into byte data. Based on mapping relationships between predetermined byte data and predetermined characters in a pre-stored character set, character data corresponding to the byte data, which has been converted from the information content, is found from the pre-stored character set. This character data is then sent out by means of messaging. Therefore, under a condition that data length is not increased, the byte data which has been converted from the information content is converted into a text that is transmissible by a message, thus improving the goal of transmitting information content of complex communications. This thereby solves the technical problems of limited areas of use of messages due to a length limitation for content in the messages, and expands the areas of use of the messages.

### Brief Description of the Drawings

Accompanying drawings that are described herein are used for providing further understanding of the present invention, and form a part of the present invention. Illustrative embodiments and a description thereof are used for explaining the present invention, and are not construed as an improper limitation of the present invention. In the drawings:
FIG. 1 is a hardware structural block diagram of a computing terminal of a message sending method in accordance with an embodiment of the present invention.
FIG. 2 is a flowchart of a message sending method in accordance with a first embodiment of the present invention.
FIG. 3 is a flowchart of a message receiving method in accordance with a second embodiment of the present invention.
FIG. 4 is a structural block diagram of a first message sending apparatus in accordance with an embodiment of the present invention.
FIG. 5 is a structural block diagram of a second message sending apparatus in accordance with an embodiment of the present invention.
FIG. 6 is a structural block diagram of a third message sending apparatus in accordance with an embodiment of the present invention.
FIG. 7 is a structural block diagram of a fourth message sending apparatus in accordance with an embodiment of the present invention.
FIG. 8 is a structural block diagram of a first message receiving apparatus in accordance with an embodiment of the present invention.
FIG. 9 is a structural block diagram of a second message receiving apparatus in accordance with an embodiment of the present invention.
FIG. 10 is a structural block diagram of a computing terminal in accordance with a fifth embodiment of the present invention.

### Detailed Description

In order to enable one skilled in the art to understand technical solutions of the present invention in a better manner, the solutions of the embodiments of the present invention are described in a clear and comprehensive manner in conjunction with the accompanying drawings of the embodiments of the present invention. Apparently, the described embodiments merely represent some and not all of the embodiments of the present invention. Based on the embodiments in the present invention, all other embodiments that are obtained by one of ordinary skill in the art without making any creative effort will all fall within the scope of protection of the present invention.

It should be noted that terms such as "first", "second" in the specification, claims and drawings of the present invention are used for distinguishing similar objects, and are not intended to describe a particular order or ordering. It can be understand that this used data can be exchanged under a suitable situation, such that the embodiments of the present invention described herein can be implemented in an order other than the ones shown or described herein. Moreover, terms such as "include", "have" or other variations thereof are intended to cover non-exclusive inclusion. For example, a process, method, system, product or device including a series of operations or elements not only includes those operations or elements clearly listed, but may also include other operations or elements not explicitly listed, or inherent operations or elements of the process, method, system, product or device.

### First Embodiment

According to the present embodiment of the present invention, an exemplary message sending method is also provided. It should be noted that operations shown in a flowchart of an accompanying drawing can be executed in a computing system having computer-executable instructions. Moreover, although a flowchart shows a logical order, operations can be executed in an order different from the one as shown or described herein.

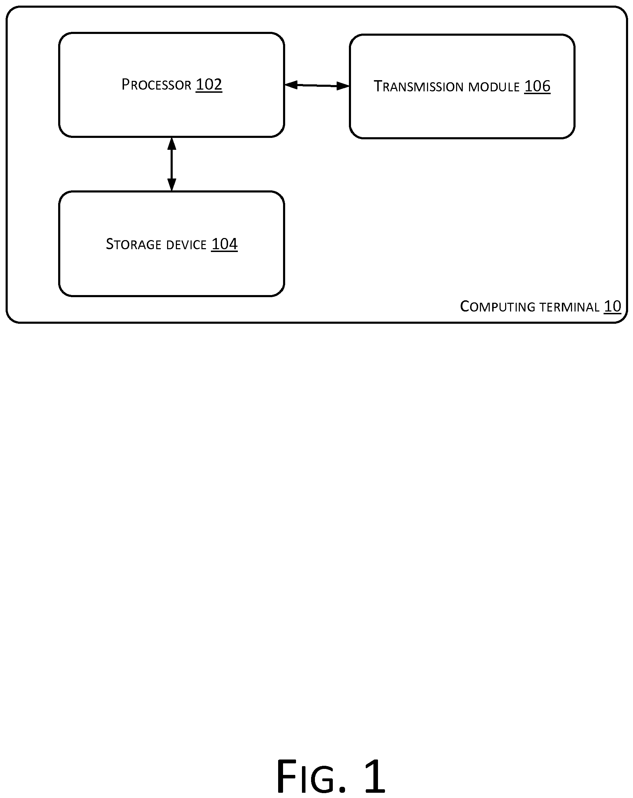

The exemplary method provided by the first embodiment can be executed in a mobile terminal, a computing terminal or a similar computing apparatus. A computing terminal is used as an example. FIG. 1 is a hardware structural block diagram of a computing terminal associated with a message sending method in accordance with an embodiment of the present invention. As shown in FIG. 1, a computing terminal 10 may include one or more (only one is shown in the figure) processors 102, (the processor 102 may include, but is not limited to, a processing apparatus such as a micro-processor (MCU) or a programmable logic device FPGA), a storage device 104 used for storing data, a transmission module 106 used for communication functions. One of ordinary skill in the art can understand that the structure shown in FIG. 1 is merely illustrative, and is not construed as limitations to the above electronic apparatus. For example, the computing terminal 10 may also include more or fewer components as shown in FIG. 1, or have a configuration that is different from the one shown in FIG. 1.

The storage device 104 can be used for storing software programs or modules of software, such as program instructions/modules corresponding to a message sending method of the embodiments of the present invention. The processors 102 executes various functional applications and data processing by running software program(s) and module(s) stored in the storage device 104, i.e., implementing the message sending method of the above software program. The storage device 104 may include a high-speed random access memory, and may also include non-volatile memory, such as one or more magnetic storage apparatus, flash storage, or other non-volatile solid state memory. In some embodiments, the storage device 104 may further include remotely configured storage devices corresponding to the processors 102. These remote storage devices may be connected to the computing terminal 10 through a network. Examples of the network include, but are not limited to, the Internet, an intranet, a local area network, a mobile communication network, or a combination thereof.

The transmission module 106 is used for receiving or sending data through a network. An example of the network may include a wireless network provided by a communication provider of the computing terminal 10. In an embodiment, the transmission module 106 includes a network interface controller (NIC), which can conduct communications with the Internet by connecting with base station(s) and other network devices. In an embodiment, the transmission module 106 may be a radio frequency (RF) module, which is used for conducting communications with the Internet through a wireless method.

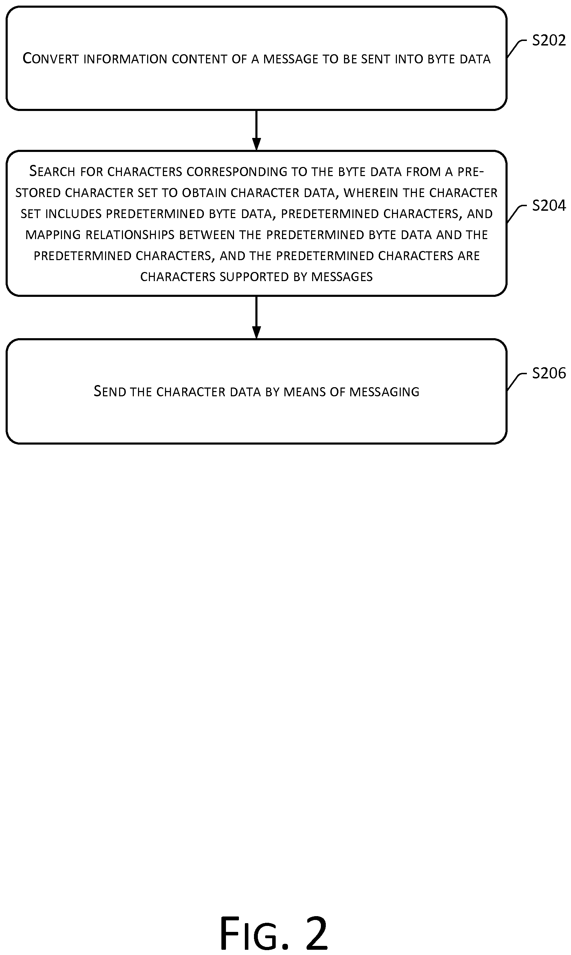

Under the above running environment, the present invention provides a message sending method as shown in FIG. 2. FIG. 2 is a flowchart of a message sending method in accordance with the first embodiment of the present invention. As shown in FIG. 2, the method includes the following operations.

S202 converts information content of a message to be sent into byte data.

It should be noted that a number of approaches can exist for converting information content of a message to be sent into byte data. In a preferred embodiment, the following approach may be used for implementation: obtaining a character string corresponding to information content; extracting values of the character string; using the extracted values as array elements to construct a byte array; and using elements of the byte array as byte data. By extracting the values of the character string corresponding to the information content, simplification is performed on the character string to generate a byte array, thus reducing a length of information content that needs to be sent in a certain extent. It should be noted that this type of simplification process may not be executed and information content can directly be converted into character data, if information content of a message to be sent does not exceed a length that can be sent in a single message after performing coding through conventional coding or a pre-stored character set.

In the embodiments of the present invention, data models of the elements in the above byte array can be defined adaptively. In a preferred embodiment, data models of the elements can be adjusted according to respective character lengths of the elements in the byte array. Different data models have different byte lengths. By adaptively defining respective data models in byte data, a number of byte that is needed by a byte array can be reduced.

"[command=5, cmdid=48000000, timestamp=1418269187005, imei=863121027176726, pwd=123456, data1=1418269187005, data2=1418269187005, data3=1418269187005]" is used as an example of a character string corresponding to information content of a message. A length of this character string is 142 characters. In a specific embodiment, for this character string, an array that is obtained by extracting values from the character string is [5, 48000000, 1418269187005, 863121027176726, 123456, 1418269187005, 1418269187005, 1418269187005]. Based on data lengths of elements in this array, respective data models of the elements can be adapted. For example, the first element is 5. As such, only one byte is needed for representation. Therefore, a data model of this first element can be limited as a byte type, without the need of limiting the data model as an int type or a long type. For other elements, a similar approach can be used for adaptively defining data models of these elements. For the above array, respective data models of the elements of the array obtained by adaptively defining the data models are [byte, long, long, long, int, long, long, long] respectively. As can be seen, this array can be represented by 53 bytes only. As can be seen, through this preferred embodiment, data that originally needs 142 characters for representation can be represented by 53 characters only through the above processing method. Furthermore, the above data becomes a byte array of a length of 53.

S204 searches for characters corresponding to the byte data from a pre-stored character set to obtain character data, wherein the character set includes predetermined byte data, predetermined characters, and mapping relationships between the predetermined byte data and the predetermined characters, and the predetermined characters are characters supported by messages.

It should be noted that the pre-stored character set can be determined through the following approach: selecting a predetermined number of characters from a character set that is supported by messages according to predetermined rule(s), the selected characters being not duplicated; and establishing mapping relationships between various pieces of byte data and the predetermined number of the selected characters. The character set that is supported by the messages may be a character set that supports transmission of Unicode. Furthermore, selecting the predetermined number of characters from the character set can be a selection according to certain rule(s), or can be a random selection, provided that the selected characters of the predetermined number are not duplicated. Preferably, the predetermined number may be 256, i.e., a range that can be represented by one byte.

For example, 256 non-duplicate characters are selected from an Unicode character set to obtain a pre-stored character set as 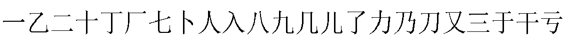 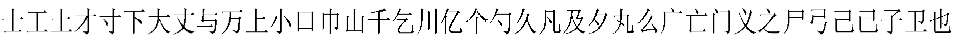 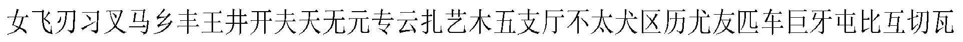 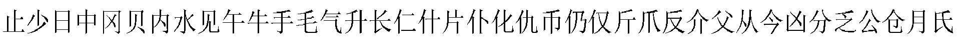 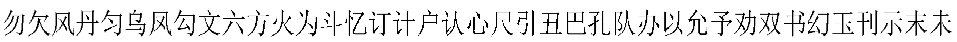 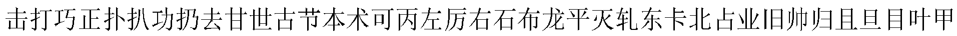 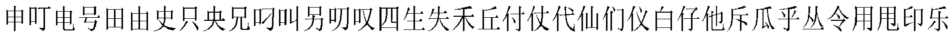 . Mapping relationships between respective positions or sequence numbers of characters in the pre-stored character set and the characters can be mapping relationships between various pieces of byte data and the predetermined number of selected characters, which is not limited herein.

S206 sends the character data by means of messaging.

{pwd=12345} is used as an example of data corresponding to information content of a message that is sent and converted into such a byte array, for example, [114,86,50,67,88,81,54,78,68,65,66,104,114,71,108,76,106,102,99,86,51,103,61,61]. If content of this byte array is treated as a string for transmission, a length thereof is 80, longer than a message. Using the above example method, if the pre-stored character set is the character set that is predetermined in the above embodiment, by corresponding a value of each byte in the byte array to a character in the pre-stored character set as described above, the byte array is changed into: 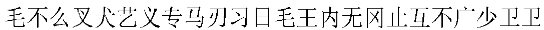 , with a length of 24, after coding. Character data that is obtained is: 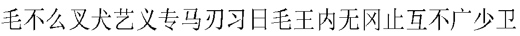 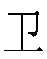 . Therefore, in the embodiments of the present invention, a length of content of a message that is sent by messaging is greatly reduced by using a pre-stored character set for coding. The degree of complexity of the information content is thus increased, expanding the usage scope of the message.

Using the above operations, information content of a message to be sent is converted into byte data. Based on mapping relationships between predetermined byte data and predetermined characters in a pre-stored character set, character data corresponding to the byte data, which has been converted from the information content, is found from the pre-stored character set. This character data is then sent out by means of messaging. Therefore, under a condition that a data length is not increased, the byte data which has been converted from the information content is converted into a text that is transmissible by a message, thus improving the goal of transmitting information content of complex communications. This thereby solves the technical problems of limited areas of use of messages due to a length limitation for content in the messages, and expands the areas of use of the messages.

In the embodiments of the present invention, prior to S204, the method further includes encrypting the elements in the byte array.

It should be noted that the elements in the byte array can be encrypted using an AES algorithm. The AES algorithm is an algorithm in existing technologies, and is not described in detail herein. After encryption by the AES algorithm, a length of the byte array is increased by a certain extent. In a preferred embodiment, a 128-bit encryption may be used, and the encrypted byte array may be increased by a certain degree. However, the embodiments of the present invention can shorten a length of information content of a message that is to be sent during transmission by encrypting a byte array, and therefore can perform encryption on information of the message to ensure the security of the information content of the message during transmission.

It should be noted that the embodiments of the present invention are mainly used for solving a situation when a length of a byte array is less than a length of a message and the length thereof exceeds the length of the message after going through conventional coding such as base64. The embodiments of the present invention perform coding using the pre-stored character set as described above, rather than using conventional coding. This allows the byte array to become a text transmissible by a message without changing a data length thereof, and thus transmission can be performed through a message.

In order to understand the present invention in a better manner, the above embodiments of the present invention are described in further detail in conjunction with preferred embodiments.

The preferred embodiments provided by the embodiments of the present invention perform processing such as simplification, encryption, coding, etc., on data, and can send the processed content through messaging.

Before using the preferred embodiments of the present invention, a character dictionary is needed to be generated and used. The character dictionary is an original creation of the embodiments of the present application, and is a key for solving byte data sent by a message.

A method of generating the above character dictionary is to randomly select 256 non-duplicate characters from a character set that is allowable for messages to generate a dictionary, which corresponds to a range that can be represented by a byte. For example, a dictionary that is generated by randomly selecting 256 non-duplicate characters from a character set that is allowable for messages includes: " 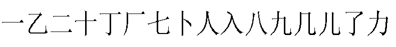 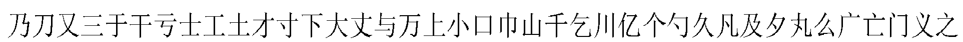 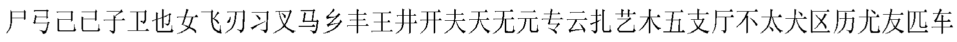 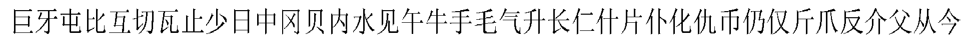 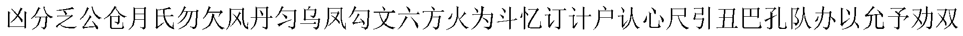 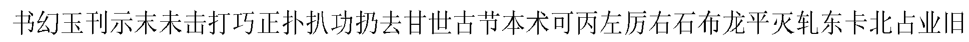 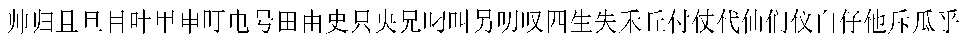 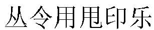 ".

A method of using the above character dictionary is to traverse a byte array and search a character dictionary based on values in the byte array to generate a character string, and to restore an original byte array based on the character string and the same character dictionary when decoding.

For example, after coding, a byte array of 64 bytes is converted into " 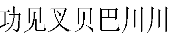 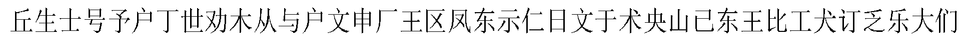 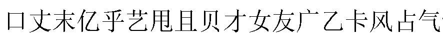 ". A length thereof is not increased, and can be sent through messaging.

A process of message processing is described below, and includes the following operations.

### S2011: Simplification

Original data: [command=5, cmdid=48000000, timestamp=1418269187005, imei=863121027176726, pwd=123456, data1=1418269187005, data2=1418269187005, data3=1418269187005], with a length of 142.

The original data is simplified as [5, 123456, 48000000, 1418269187005, 863121027176726, 1418269187005, 1418269187005, 1418269187005]. Data models of the array can be adjusted according to data lengths. Therefore, the data models of the array can be further limited to [byte, int, long, long, long, long, long, long].

After simplification, data that needs 142 characters for representation, can now be represented by only 53 bytes. Thus, the above data is changed into a byte array having a length of 53.

### S2012: Encryption

Encryption is performed on data of the simplified byte array using AES. Based on a selection of the AES algorithm, a length thereof is increased a little bit. In an application, 128-bit encryption is generally used. The length of the byte array is changed from 53 to 64.

### S2013: Coding

The byte array of 64 bytes will become messy code, and cannot be recognized in a message if being directly converted into a string. After using the commonly used base64 for coding, a data length will increase, and 64 bytes of data will become 90 bytes, which exceeds a length that can be transmitted in a single message.

However, coding using the character dictionary described in the preferred embodiments of the present invention can change data into a text transmissible in a message without changing a length of the data.

According to the preferred embodiments of the present invention, each data packet can transmit a size up to 53 bytes (based on different encryption methods are used, this length can be changed, and the maximum does not exceed 70). Within this length, a more complex communication can be completed by self-defining a format through negotiation.

It should be noted that the foregoing method embodiments are described in a series of combinations of actions for the sake of description. The present invention is not limited to an order of actions described, because certain operations can be performed in other orders or in parallel according to the present invention. Furthermore, one skilled in the art can also understand that the embodiments described in the specification are preferred embodiments. Actions and modules involved therein are not essential to the present invention

Through the description of the above implementations, one of ordinary skill in the art can clearly understand that the embodiments of the message sending method can be implemented using software with necessary universal hardware platform(s), or apparently using hardware. However, the former one is a better implementation under a number of situations. Based on this understanding, the essence of the technical solutions of the present invention or the portions that provide contribution to the existing technologies can be implemented in a form of a software product. The computer software product is stored in a storage media (such as ROM/RAM, a magnetic disk, an optical drive), which includes instructions for causing a terminal device (which may be a mobile phone, a computer, a server, or a network device, etc.) to perform the method described in various embodiments of the present invention.

### Second Embodiment

According to the embodiments of the present invention, an exemplary message receiving method is provided. It should be noted that operations shown in a flowchart of an accompanying drawing can be executed in a computing system having computer-executable instructions. Moreover, although a flowchart shows a logical order, operations can be executed in an order different from the one as shown or described herein.

The exemplary method provided by the second embodiment of the present invention can be executed in a mobile terminal, a computing terminal or a similar computing apparatus. A computing terminal is used as an example, which can be implemented using a hardware structural block diagram of a computing terminal as shown in FIG. 1.

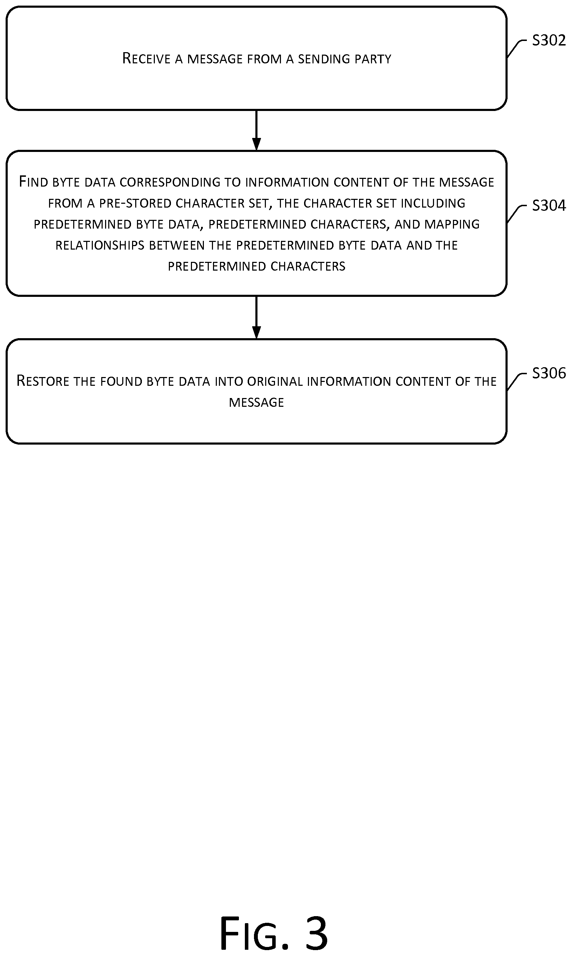

Under the above running environment, the present invention provides a message receiving method as shown in FIG. 3. FIG. 3 is a flowchart of a message receiving method in accordance with the second embodiment of the present invention. As shown in FIG. 3, the method includes the following operations.

S302 receives a message from a sending party.

It should be noted that the message can be a message sent in the first embodiment. A representation of the message can be character data that has been coded using a pre-stored character set, or character data that has been simplified, encrypted and coded using a pre-stored character set, which is not limited therein.

S304 finds byte data corresponding to information content of the message from a pre-stored character set, the character set including predetermined byte data, predetermined characters, and mapping relationships between the predetermined byte data and the predetermined characters.

The pre-stored character set can be determined through the following approach: selecting a predetermined number of characters from a character set that is supported by messages according to predetermined rule(s), the selected characters being not duplicated; and establishing mapping relationships between various pieces of byte data and the predetermined number of the selected characters. The character set that is supported by the messages may be a character set that supports transmission of Unicode. Furthermore, selecting the predetermined number of characters from the character set can be a selection according to certain rule(s), or can be a random selection, provided that the selected characters of the predetermined number are not duplicated. Preferably, the predetermined number may be 256, i.e., a range that can be represented by one byte.

For example, 256 non-duplicate characters are selected from an Unicode character set to obtain a pre-stored character set as 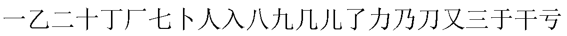 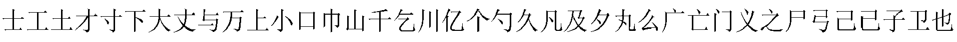 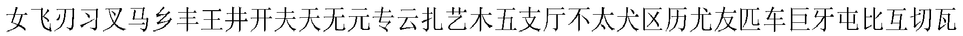 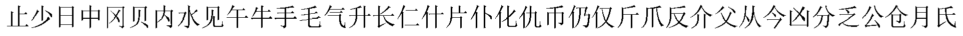 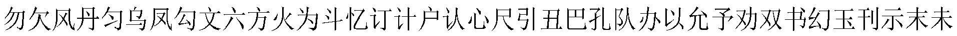 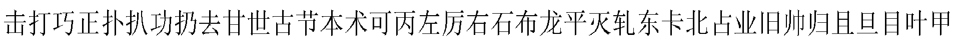 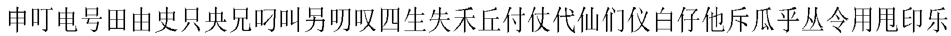 . Mapping relationships between respective positions or sequence numbers of characters in the pre-stored character set and the characters can be mapping relationships between various pieces of byte data and the predetermined number of selected characters, which is not limited herein.

In the embodiments of the present invention, S304 may include finding byte array corresponding to information content from a pre-stored character set, wherein elements in the byte array are determined based on values of a character string, and the character string is used for representing original information content of the message.

S306 restores the found byte data into original information content of the message.

The above pre-stored character set is used as an example. If character data of the message that is received is: 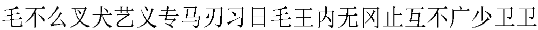 , a message receiving method can be expressed as to find a sequence number or position of each character in the character data in the pre-stored character set from the pre-stored character set. Finding a sequence number of each character in character data in the pre-stored character set is used as an example. A result of finding the above character data is byte data is [114,86,50,67,88,81,54,78,68,65,66,104,114,71,108,76,106,102,99,86,51,103,61,61]. Original data corresponding to this byte data is {pwd=12345}. As such, original information content of the message is restored.

Using the above operations, byte data corresponding to information content of the message is found from the pre-stored character set based on mapping relationships between predetermined byte data and predetermined characters in the pre-stored character set. The found byte data is then restored into original information content of the message. Decoding using the pre-stored character set is performed on the message that has been coded using the pre-stored character set, to store the original information content of the message, thus achieving the goal of transmitting information content of complicated communication, solving the technical problems of limited areas of use of messages due to a length limitation for content in the messages, and expands the areas of use of the messages.

In the preferred embodiments of the present invention, if the message has been encrypted when sending, the method further includes decrypting the found byte data in the pre-stored character set to obtain byte array corresponding to the information content.

In order to understand the present invention in a better manner, the foregoing embodiments of the present invention are described in further detail in conjunction with the preferred embodiments.

S2011 - S2013 of the preferred embodiments of the message sending method in the first embodiment are used as an example. After a message is sent out through S2011 - S2013 and after a receiving party receives the message, a same dictionary (i.e., a character dictionary of the present preferred embodiment) in the preferred embodiments of the first embodiment is used for decoding each piece of byte data to obtain encrypted data body. The data body is then decrypted to obtain content of a data packet.

It should be noted that the foregoing method embodiments are described in a series of combinations of actions for the sake of description. The present invention is not limited to an order of actions described, because certain operations can be performed in other orders or in parallel according to the present invention. Furthermore, one skilled in the art can also understand that the embodiments described in the specification are preferred embodiments.

### Actions and modules involved therein are not essential to the present invention

Through the description of the above implementations, one of ordinary skill in the art can clearly understand that the embodiments of the message sending method can be implemented using software with necessary universal hardware platform(s), or apparently using hardware. However, the former one is a better implementation under a number of situations. Based on this understanding, the essence of the technical solutions of the present invention or the portions that provide contribution to the existing technologies can be implemented in a form of a software product. The computer software product is stored in a storage media (such as ROM/RAM, a magnetic disk, an optical drive), which includes instructions for causing a terminal device (which may be a mobile phone, a computer, a server, or a network device, etc.) to perform the method described in various embodiments of the present invention.

### Third Embodiment

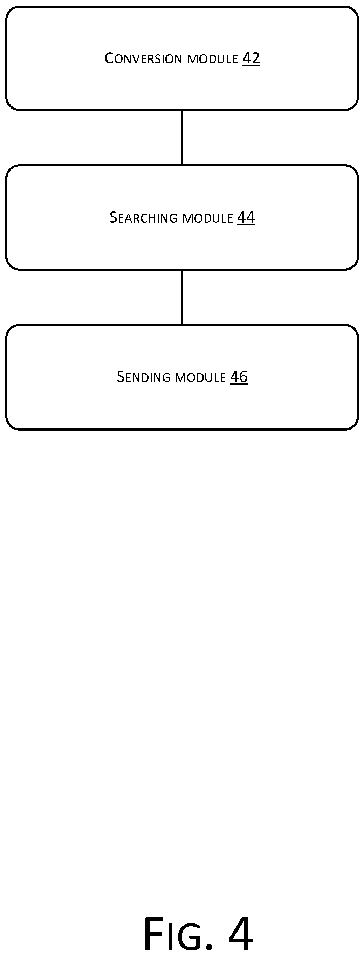

According to the embodiments of the present invention, an apparatus used for implementing the message sending method of the first embodiment is further provided. FIG. 4 is a first structural block diagram of a message sending apparatus in accordance with the embodiments of the present invention. As shown in FIG. 4, the apparatus includes a conversion module 42 used for converting information content of a message into byte data.

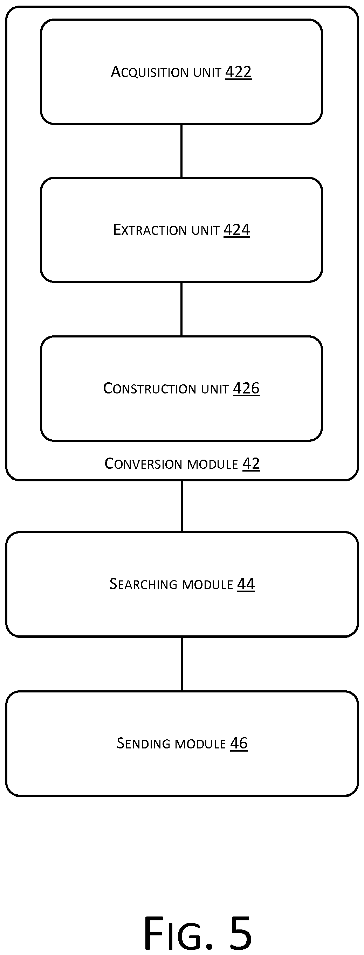

FIG. 5 is a second structural block diagram of a message sending apparatus in accordance with the embodiments of the present invention. As shown in FIG. 5, in a preferred embodiment, the conversion module 42 includes an acquisition unit 422 used for obtaining a character string corresponding to the information content; an extraction unit 424, coupled with the acquisition unit 422, used for extracting values of the character string; and a construction unit 426, coupled with the extraction unit 424, used for using the extracted values as elements of an array to form a byte array, and using elements of the byte array as byte data. By using the conversion module 42 to extract values of a character string corresponding to the information content for simplifying the character string and generating a byte array, a length of information content that needs to be sent is reduced by a certain extent. It should be noted that if information content of a message to be sent is not simplified and does not exceed a length that can be sent by a single message after going through conventional coding or coding using a pre-stored character set as described below, this simplification process may not need to be performed, and the information content can be directly converted into byte data. Therefore, the above extraction module 424 is optional.

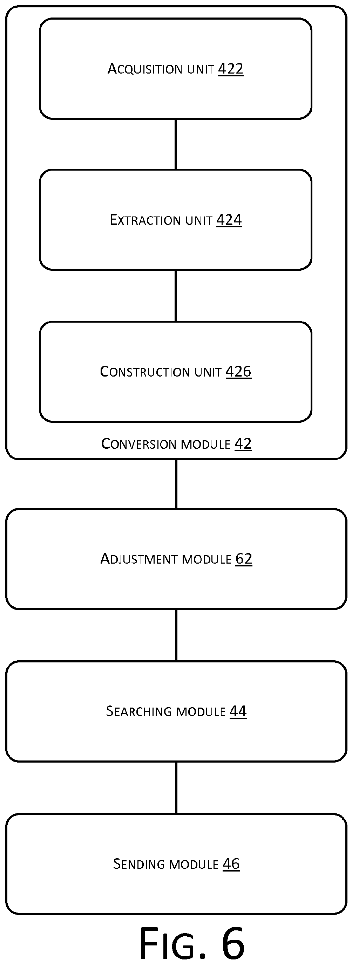

Data models of the elements in the byte array can be adaptively defined. FIG. 6 is a third structural block diagram of a message sending apparatus in accordance with the embodiments of the present invention. As shown in FIG. 6, in a preferred embodiment of the present invention, the above apparatus further includes an adjustment module 62, coupled with the conversion module 42, used for adjusting data models of the elements according to respective byte lengths of the elements in the byte array, wherein different data models have different byte lengths. Number of bytes needed by the byte array can be reduced using the above method of adaptively defining data models in byte data.

Preferably, in the embodiments of the present invention, the adjustment module 62 is coupled with the construction unit 426 in the conversion module 42.

"[command=5, cmdid=48000000, timestamp=1418269187005, imei=863121027176726, pwd=123456, data1=1418269187005, data2=1418269187005, data3=1418269187005]" is used as an example of a character string corresponding to information content of a message. A length of this character string is 142 characters. In a specific embodiment, the extraction unit 424 extracts values from the character string, and an array that is obtained is [5, 48000000, 1418269187005, 863121027176726, 123456, 1418269187005, 1418269187005, 1418269187005]. Based on data lengths of elements in this array, the adjustment module 62 can adapt respective data models of the elements. For example, the first element is 5. As such, only one byte is needed for representation. Therefore, a data model of this first element can be limited as a byte type, without the need of limiting the data model as an int type or a long type. For other elements, a similar approach can be used for adaptively defining data models of these elements. For the above array, respective data models of the elements of the array obtained by adaptively defining the data models are [byte, long, long, long, int, long, long, long] respectively. As can be seen, this array can be represented by 53 bytes only. As can be seen, through this preferred embodiment, data that originally needs 142 characters for representation can be represented by 53 characters only through the above processing method. Furthermore, the above data becomes a byte array of a length of 53.

A searching module 44 is coupled with the conversion module 42, and is used for searching for characters corresponding to the byte data from a pre-stored character set to obtain character data, wherein the character set includes predetermined byte data, predetermined characters, and mapping relationships between the predetermined byte data and the predetermined characters, and the predetermined characters are characters supported by messages.

The pre-stored character set can be determined through the following approach: selecting a predetermined number of characters from a character set that is supported by messages according to predetermined rule(s), the selected characters being not duplicated; and establishing mapping relationships between various pieces of byte data and the predetermined number of the selected characters. The character set that is supported by the messages may be a character set that supports transmission of Unicode. Furthermore, selecting the predetermined number of characters from the character set can be a selection according to certain rule(s), or can be a random selection, provided that the selected characters of the predetermined number are not duplicated. Preferably, the predetermined number may be 256, i.e., a range that can be represented by one byte.

For example, 256 non-duplicate characters are selected from an Unicode character set to obtain a pre-stored character set as 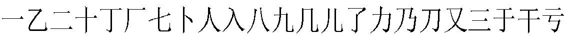 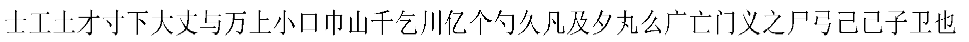 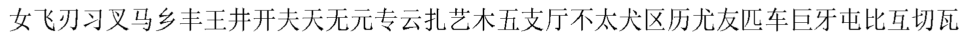 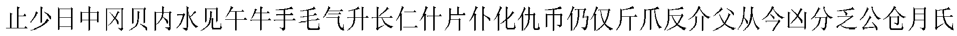 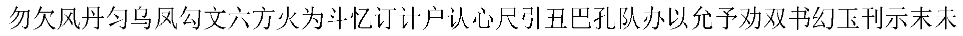 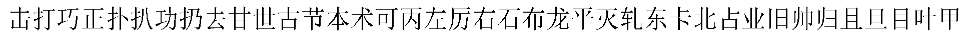 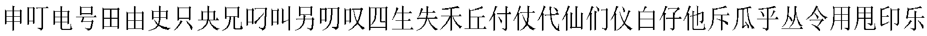 .

Mapping relationships between respective positions or sequence numbers of characters in the pre-stored character set and the characters can be mapping relationships between various pieces of byte data and the predetermined number of selected characters, which is not limited herein.

A sending module 46 is used for sending the character data through messaging.

{pwd=12345} is used as an example of data corresponding to information content of a message that is sent by the apparatus, which is converted into such a byte array, for example, [114,86,50,67,88,81,54,78,68,65,66,104,114,71,108,76,106,102,99,86,51,103,61,61], by the conversion module 42. If content of this byte array is treated as a string for transmission, a length thereof is 80, longer than a message. Using the above example method, if the pre-stored character set is the character set that is predetermined in the above embodiment, by corresponding a value of each byte in the byte array to a character in the pre-stored character set as described above, the byte array is changed into: 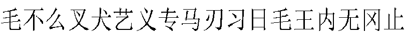 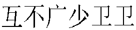 , with a length of 24, after coding. Character data that is obtained is: 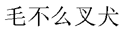 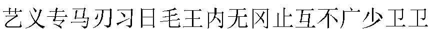 . Therefore, in the embodiments of the present invention, a length of content of a message that is sent by messaging is greatly reduced by using a pre-stored character set for coding. The degree of complexity of the information content is thus increased, expanding the usage scope of the message.

Using the above modules in the apparatus, byte data that is converted from information content of a message is converted into a text that is transmissible by the message, without increasing a data length, thus improving the goal of transmitting information content of complex communications. This thereby solves the technical problems of limited areas of use of messages due to a length limitation for content in the messages, and expands the areas of use of the messages.

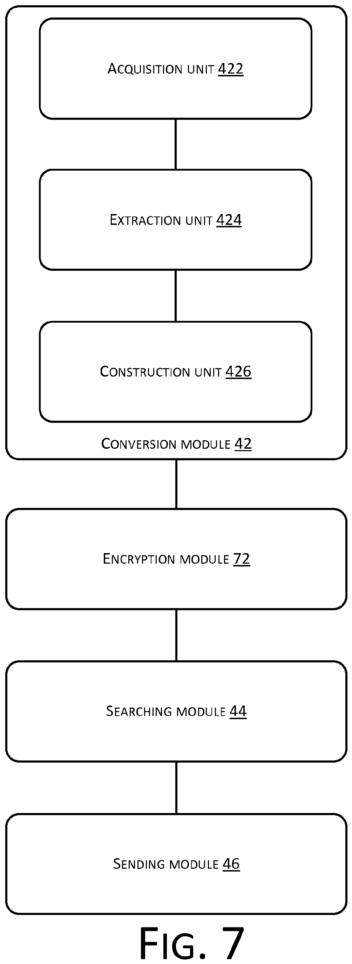

FIG. 7 is a fourth structural block diagram of a message sending apparatus in accordance with the embodiments of the present invention. As shown in FIG. 7, the above apparatus further includes an encryption module 72, which is coupled with the conversion module 42, used for encrypting the elements in the byte array. It should be noted that the encryption module 72 can encrypt the elements in the byte array using an AES algorithm. The AES algorithm is an algorithm in existing technologies, and is not described in detail herein. After encryption by the AES algorithm, a length of the byte array is increased by a certain extent. In a preferred embodiment, a 128-bit encryption may be used, and the encrypted byte array may be increased by a certain degree. However, the embodiments of the present invention can shorten a length of information content of a message that is to be sent during transmission by encrypting a byte array, and therefore can perform encryption on information of the message to ensure the security of the information content of the message during transmission.

It should be noted that the embodiments of the present invention are mainly used for solving a situation when a length of a byte array is less than a length of a message and the length thereof exceeds the length of the message after going through conventional coding such as base64. The embodiments of the present invention perform coding using the pre-stored character set as described above, rather than using conventional coding. This allows the byte array to become a text transmissible by a message without changing a data length thereof, and thus transmission can be performed through a message.

### Fourth Embodiment

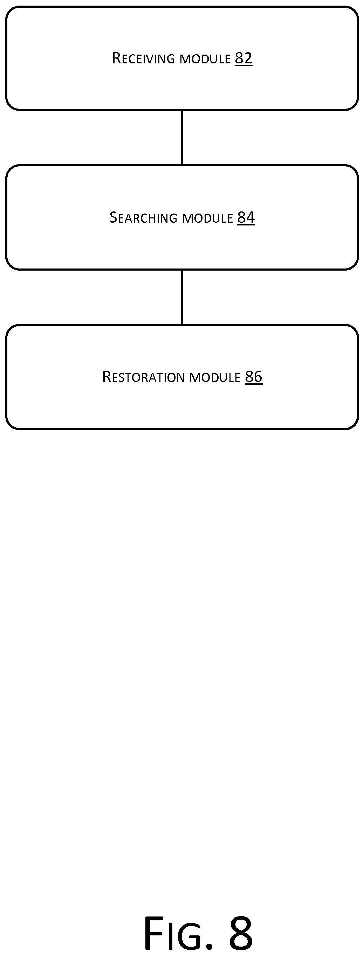

According to the embodiments of the present invention, an apparatus used for implementing the message receiving method of the second embodiment is further provided. FIG. 8 is a first structural block diagram of a message receiving apparatus in accordance with the embodiments of the present invention. As shown in FIG. 8, the apparatus includes a receiving module 82 used for receiving a message from a sending party.

It should be noted that the message can be a message sent in the first embodiment. A representation of the message can be character data that has been coded using a pre-stored character set, or character data that has been simplified, encrypted and coded using a pre-stored character set, which is not limited therein.

A searching module 84 is coupled with the receiving module 82, and is used for finding byte data corresponding to information content of the message from a pre-stored character set, the character set including predetermined byte data, predetermined characters, and mapping relationships between the predetermined byte data and the predetermined characters.

The pre-stored character set can be determined through the following approach: selecting a predetermined number of characters from a character set that is supported by messages according to predetermined rule(s), the selected characters being not duplicated; and establishing mapping relationships between various pieces of byte data and the predetermined number of the selected characters. The character set that is supported by the messages may be a character set that supports transmission of Unicode. Furthermore, selecting the predetermined number of characters from the character set can be a selection according to certain rule(s), or can be a random selection, provided that the selected characters of the predetermined number are not duplicated. Preferably, the predetermined number may be 256, i.e., a range that can be represented by one byte.

For example, 256 non-duplicate characters are selected from an Unicode character set to obtain a pre-stored character set as 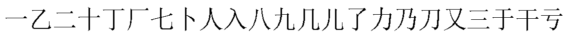 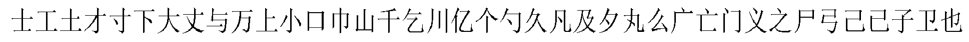 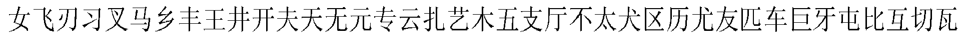 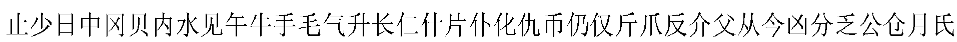 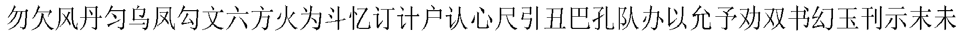 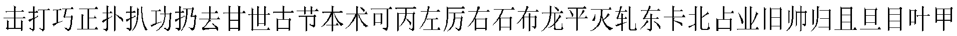 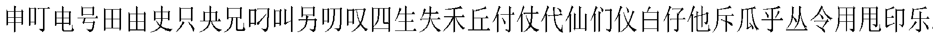 .

Mapping relationships between respective positions or sequence numbers of characters in the pre-stored character set and the characters can be mapping relationships between various pieces of byte data and the predetermined number of selected characters, which is not limited herein.

The searching module 84 is further used for finding byte array corresponding to the information content from the pre-stored character set, wherein elements in the byte array are determined based on values of a character string, and the character string is used for representing original information content of the message.

A restoration module 86 is coupled with the searching module 84, and is used for restoring the found byte data into original information content of the message.

The above pre-stored character set is used as an example. If character data of the message received by the receiving module 82 in the receiving apparatus is: 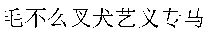 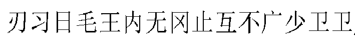 , the searching module 84 finds a sequence number or position of each character in the character data in the pre-stored character set from the pre-stored character set. Finding a sequence number of each character in character data in the pre-stored character set is used as an example. A result of finding the above character data is byte data is [114,86,50,67,88,81,54,78,68,65,66,104,114,71,108,76,106,102,99,86,51,103,61,61]. The restoration module 86 restores this byte data to original data as {pwd=12345}. As such, original information content of the message is restored.

Using the above apparatus, byte data corresponding to information content of the message is found from the pre-stored character set based on mapping relationships between predetermined byte data and predetermined characters in the pre-stored character set. The found byte data is then restored into original information content of the message. Decoding using the pre-stored character set is performed on the message that has been coded using the pre-stored character set, to store the original information content of the message, thus achieving the goal of transmitting information content of complicated communication, solving the technical problems of limited areas of use of messages due to a length limitation for content in the messages, and expands the areas of use of the messages.

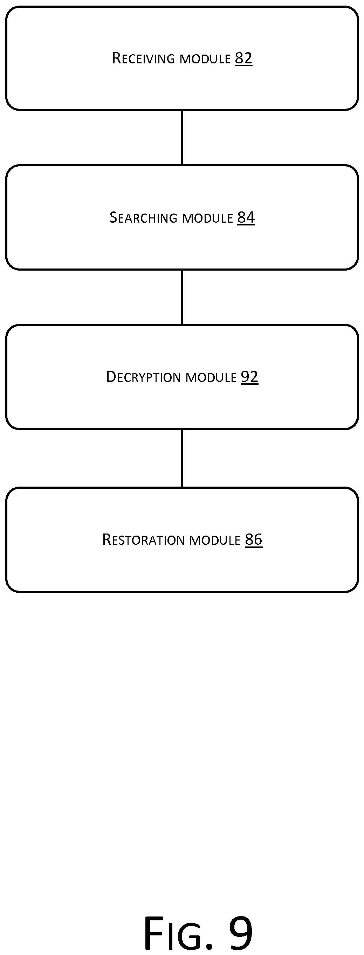

FIG. 9 is a second structural block diagram of a message receiving apparatus in accordance with an embodiment of the present invention. As shown in FIG. 9. The above apparatus further includes a decryption module 92, coupled with the searching module 84, used for decrypting the found byte data in the pre-stored character set to obtain the byte array corresponding to the information content. It should be noted that the process of decryption is a reverse process of the process of encryption when a message is sent. When a message is encrypted when being sent, and therefore needs to be decrypted when being received. If encryption is not performed when sending, decryption does not need to be performed when receiving. Therefore, this decryption module is optional.

### Fifth Embodiment

The embodiments of the present invention can provide a computing terminal. The computing terminal can be any one computing terminal in a group of computing terminals. Optionally, in the present embodiment, the computing terminal may also be substituted by a terminal device such as a mobile terminal.

Optionally, in the present embodiment, the computing terminal may be at least one network device in a plurality of network devices of a computer network.

In the present embodiment, the computing terminal can execute the following operations of program codes in an application program for a message sending method: converting information content of a message to be sent into byte data; searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and sending the character data by means of messaging.

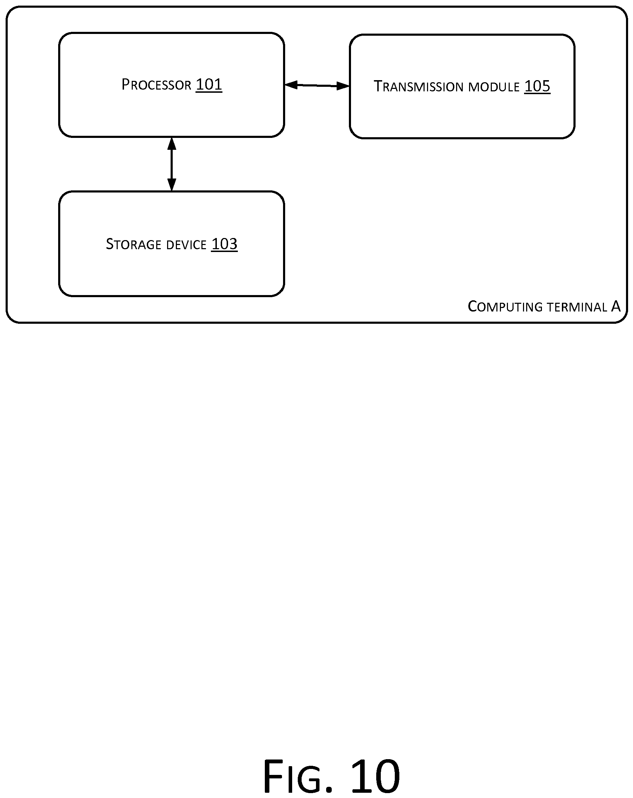

Optionally, FIG. 10 is a structural diagram of a computing terminal in accordance with the fifth embodiment of the present invention. As shown in FIG. 10, the computing terminal A may include one or more (only one is shown in the figure) processors 101, memory 103, and a transmission module 105.

The memory 103 can be used for storing software programs or modules of software, such as program instructions/modules corresponding to a message sending method of the embodiments of the present invention. The processors 101 executes various functional applications and data processing by running software program(s) and module(s) stored in the memory 103, i.e., implementing the message sending method of the above software program. The memory 103 may include a high-speed random access memory, and may also include non-volatile memory, such as one or more magnetic storage apparatus, flash storage, or other non-volatile solid state memory. In some embodiments, the memory 103 may further include remotely configured storage devices corresponding to the processors 101. These remote storage devices may be connected to the computing terminal 10 through a network. Examples of the network include, but are not limited to, the Internet, an intranet, a local area network, a mobile communication network, or a combination thereof.

The transmission module 105 is used for receiving or sending data through a network. Examples of the network may include a wired network and a wireless network. In an embodiment, the transmission module 105 includes a network interface controller (NIC), which can conduct communications with the Internet or a local area network by connecting with routers via network cables and other network devices. In an embodiment, the transmission module 105 may be a radio frequency (RF) module, which is used for conducting communications with the Internet through a wireless method.

The storage device 103 is used for storing information of predetermined action requirements and predetermined privilege users, and application programs. For example, the storage device 103 is used for storing program codes that implement the following operations: obtaining a character string corresponding to information content; extracting values of the character string; and using the extracted values as elements of an array to construct a byte array, and using elements in the byte array as byte data. Optionally, the storage device 103 is further used for storing program codes that implement the following operations: adjusting data models of the elements according to respective byte length of the elements in the byte array, wherein different data models have different byte lengths.

Using the embodiments of the present invention, a solution for a computing terminal that can execute the message sending method is provided. Information content of a message to be sent is converted into byte data. Based on mapping relationships between predetermined byte data and predetermined characters in a pre-stored character set, character data corresponding to the byte data, which has been converted from the information content, is found from the pre-stored character set. This character data is then sent out by means of messaging. Therefore, under a condition that data length is not increased, the byte data which has been converted from the information content is converted into a text that is transmissible by a message, thus improving the goal of transmitting information content of complex communications. This thereby solves the technical problems of limited areas of use of messages due to a length limitation for content in the messages, and expands the areas of use of the messages.

One of ordinary skill in the art can understand that the structure shown in FIG. 10 is merely illustrative. The computing terminal can also be a terminal device such as a smart phone (e.g., Android phone, iOS phone, etc.), a tablet computer, a handheld computer, and a mobile Internet device (MID), etc. FIG. 10 does not impose any limitation on the structure of the above electronic apparatus. For example, the computing terminal A may also include more or fewer components (such as a network interface, a display device, etc.) shown in FIG. 10, or have a configuration different from the one shown in FIG. 10.

One of ordinary skill in the art can understand that all or some of the operations in the methods of the embodiments can be completed by instructing related hardware of a terminal device through a program. The program can be stored in a computer-readable storage media. The storage media may include a flash drive, a read-only memory (ROM), a random access memory (RAM), a magnetic disk, or an optical drive, etc.

### Sixth Embodiment

The embodiments of the present invention can provide computing terminal. The computing terminal can be any one computing terminal in a group of computing terminals. Optionally, in the present embodiment, the computing terminal may also be substituted by a terminal device such as a mobile terminal.

Optionally, in the present embodiment, the computing terminal may be at least one network device in a plurality of network devices of a computer network.

In the present embodiment, the computing terminal can execute the following operations of program codes in an application program for a message receiving method: receiving a message from a sending party; finding character data corresponding to information content of the message from a pre-stored character set, the character set includes predetermined byte data, predetermined characters, and mapping relationships between the predetermined byte data and the predetermined characters; and restoring the found character data to original information content of the message.

It should be noted that the structure of the computing terminal in this embodiment of the present invention may be the same as or different from the computing terminal in the fifth embodiment. For example, the transmission module 105 in the fifth embodiment may be used for implementation of receiving a message. Alternatively, an independent receiving module that is separate from the transmission module 105 may be set up. However, the computing terminal in the fifth embodiment is used for executing program codes for operations of a message sending method, while the computing terminal in the present embodiment is used for executing program codes for operations of a message receiving method.

Optionally, the storage device 103 may further store program codes for the following operations: finding a byte array corresponding to the information content from the pre-stored character set, wherein elements in the byte array are determined based on values of a character string, and the character string is used for representing the original information content of the message.

Using the embodiments of the present invention, a solution for a computing terminal that can execute the message receiving method is provided. Based on mapping relationships between predetermined byte data and predetermined characters in a pre-stored character set, byte data corresponding to information content of a message is found from the pre-stored character set. The found byte data is then restored into original information content of the message. Decoding using the pre-stored character set is performed on the message that has been coded using the pre-stored character set, to store the original information content of the message, thus achieving the goal of transmitting information content of complicated communication, solving the technical problems of limited areas of use of messages due to a length limitation for content in the messages, and expands the areas of use of the messages.

### Seventh Embodiment

The embodiments of the present invention also provide a storage media. Optionally, in the present embodiment, the storage media may be used for storing program codes that are executed by the message sending method provided in the first embodiment.

Optionally, in the present embodiment, the storage media may be located in any one computing terminal in a group of computing terminals in a computer network, or located in any one mobile terminal in a group of mobile terminals.

Optionally, in the present embodiment, the storage media is configured to store program codes that execute the following operations: converting information content of a message to be sent into byte data; searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and sending the character data by means of messaging.

It should be noted herein that the any one computing terminal in the group of computing terminals as described the above can establish a communication relationship with a network server and a scanning device. The scanning device can scan a value command of a web application program that is executed by php in the computing terminal.

### Eighth Embodiment

The embodiments of the present invention also provide a storage media. Optionally, in the present embodiment, the storage media may be used for storing program codes that are executed by the message receiving method provided in the first embodiment.

Optionally, in the present embodiment, the storage media may be located in any one computing terminal in a group of computing terminals in a computer network, or located in any one mobile terminal in a group of mobile terminals.

Optionally, in the present embodiment, the storage media is configured to store program codes that execute the following operations: receiving a message from a sending party; finding character data corresponding to information content of the message from a pre-stored character set, the character set includes predetermined byte data, predetermined characters, and mapping relationships between the predetermined byte data and the predetermined characters; and restoring the found character data to original information content of the message.

It should be noted herein that the any one computing terminal in the group of computing terminals as described the above can establish a communication relationship with a network server and a scanning device. The scanning device can scan a value command of a web application program that is executed by php in the computing terminal.

Sequence numbers of the embodiments of the present invention described above are merely for the purpose of description, and do not represent the qualities of the embodiments.

In the foregoing embodiments of the present invention, the description of each embodiment has its own emphasis, and a portion that is not described in detail in a certain embodiment can be referenced to related descriptions of other embodiments.

In the embodiments provided in the present invention, it can be understood that the disclosed client can be implemented in other manners. The foregoing apparatus embodiments are merely illustrative. For example, a division between the units is merely a division of logical functions. Another way of division may exist in practice. For example, multiple units or components may be combined or may be integrated into another system, or some features may be ignored or not be executed. Moreover, mutual coupling, direct coupling, or communication connection that is shown or discussed can go through some interfaces. Coupling or communication connection between units or modules can be in electrical or other forms.

Units that are described as separate components may or may not be physical separated from each other. A unit that is shown as a component may or may not be a physical unit, i.e., may be located in one place, or may be distributed among multiple network units. Some or all of the units can be selected to implement the goal of the solutions of the present embodiments based on actual requirements.

Furthermore, various functional units in the embodiments of the present invention can be integrated as a single processing unit, or can exist as physically independent units. Alternatively, two or more than two units can be integrated as a single unit. The above integrated unit can be implemented in a form of hardware, or can be implemented in a form of software.

If being implemented as a software functional unit and sold or used as an independent product, the integrated unit can be stored in a computer-readable storage media. Based on this understanding, the essence of the technical solutions of the present invention or the portions that provide contribution to the existing technologies or all or some portions of the technical solutions can be implemented in a form of a software product. The computer software product is stored in a storage media which includes instructions for causing a terminal device (which may be a personal computer, a server, or a network device, etc.) to perform some or all of the operations of the method described in various embodiments of the present invention. The storage media includes various media that can store program codes such as U disk, a read-only memory (ROM), a random access memory (RAM), a movable drive, a magnetic disk, or an optical drive.

The preferred embodiments of the present invention are described above. It should be noted that one of ordinary skill in the art can also make various improvements and polishing without departing the principles of the present invention. These improvements and polishing shall fall within the scope of protection of the present invention.

## Claims

1. A message sending method comprising:
converting information content of a message to be sent into byte data;
searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and
sending the character data through messaging.

2. The method of claim 1, wherein the pre-stored character set is determined by:
selecting a predetermined number of characters from a character set that is supported by messages according to a predetermined rule, the selected characters being not duplicated; and
establishing mapping relationships between various pieces of byte data and the predetermined number of the selected characters.

3. The method of claim 2, wherein the predetermined number is 256.

4. The method of any one of claims 1-3, wherein converting the information content of the message to be sent into the byte data comprises:
obtaining a character string corresponding to information content;
extracting values of the character string; and
using the extracted values as array elements to construct a byte array, and using elements of the byte array as byte data.

5. The method of claim 4, wherein prior to searching for the characters corresponding to the byte data from the pre-stored character set, the method further comprises adjusting data models of the elements according to respective byte lengths of the elements in the byte array, wherein different data models have different byte lengths.

6. The method of claim 4, wherein prior to searching for the characters corresponding to the byte data from the pre-stored character set, the method further comprises encrypting the elements in the byte array.

7. A message receiving method comprising:
receiving a message from a sending party;
finding character data corresponding to information content of the message from a pre-stored character set, the character set includes predetermined byte data, predetermined characters, and mapping relationships between the predetermined byte data and the predetermined characters; and
restoring the found character data to original information content of the message.

8. The method of claim 7, wherein the pre-stored character set is determined by:
selecting a predetermined number of characters from a character set that is supported by messages according to predetermined rule(s), the selected characters being not duplicated; and
establishing mapping relationships between various pieces of byte data and the predetermined number of the selected characters.

9. The method of claim 7, wherein finding the character data corresponding to the information content of the message from the pre-stored character set comprises finding byte array corresponding to the information content from the pre-stored character set, wherein elements in the byte array are determined based on values of a character string, and the character string is used for representing original information content of the message.

10. The method of claim 9, wherein the byte array is an encrypted array, and wherein prior to finding the character data corresponding to the information content of the message from the pre-stored character set, the method comprises decrypting the found data in the pre-stored character data to obtain the byte data corresponding to the information content.

11. A message sending apparatus comprising:
a conversion module used for converting information content of a message to be sent into byte data;
a searching module used for searching for characters corresponding to the byte data from a pre-stored character set to obtain character data, wherein the character set includes predetermined byte data, predetermined characters, and mapping relationships between the predetermined byte data and the predetermined characters, and the predetermined characters are characters that are supported by messages; and
a sending module used for sending the character data by means of messaging.

12. The apparatus of claim 11, wherein the pre-stored character set is determined by:
selecting a predetermined number of characters from a character set that is supported by messages according to a predetermined rule, the selected characters being not duplicated; and
establishing mapping relationships between various pieces of byte data and the predetermined number of the selected characters.

13. The apparatus of claim 11, wherein the conversion module comprises:
an acquisition unit used for obtaining a character string corresponding to the information content;
an extraction unit used for extracting values of the character string; and
a construction unit used for using the extracted values as elements of an array to form a byte array, and using elements of the byte array as byte data.

14. The apparatus of claim 13, further comprising an adjustment module used for adjusting data models of the elements according to respective byte lengths of the elements in the byte array, wherein different data models have different byte lengths.

15. The apparatus of claim 13, further comprising an encryption module used for encrypting the elements in the byte array.

16. A message receiving apparatus comprising:
a receiving module used for receiving a message from a sending party;
a searching module used for finding character data corresponding to information content of the message from a pre-stored character set, the character set includes predetermined byte data, predetermined characters, and mapping relationships between the predetermined byte data and the predetermined characters; and
a restoration module used for restoring the found character data to original information content of the message.

17. The apparatus of claim 16, wherein the pre-stored character set is determined by:
selecting a predetermined number of characters from a character set that is supported by messages according to a predetermined rule, the selected characters being not duplicated; and
establishing mapping relationships between various pieces of byte data and the predetermined number of the selected characters.

18. The apparatus of claim 16, wherein the searching module is used for finding byte array corresponding to the information content from the pre-stored character set, wherein elements in the byte array are determined based on values of a character string, and the character string is used for representing original information content of the message.

19. The apparatus of claim 18, further comprising a decryption module used for decrypting the found data in the pre-stored character set to obtain the byte array corresponding to the information content.
